# EUROPÄISCHE PATENTSCHRIFT

(11) **EP 2 576 268 B1**
(45) Veröffentlichungstag und Bekanntmachung des Hinweises auf die Patenterteilung: **25.11.2015**
(21) Anmeldenummer: 11721053.4
(22) Anmeldetag: 24.05.2011
(51) Int. Cl.: H01H 13/7065

(54) **BEDIENVORRICHTUNG FÜR EIN FAHRZEUG**
OPERATING DEVICE FOR A VEHICLE
DISPOSITIF DE COMMANDE POUR UN VÉHICULE

(30) Priorität: 28.05.2010 DE 102010021966
(43) Veröffentlichungstag der Anmeldung: 10.04.2013
(73) Patentinhaber: Valeo Schalter und Sensoren GmbH, 74321 Bietigheim-Bissingen (DE)
(72) Erfinder: HENTSCHEL, Joachim, 96479 Weitramsdorf (DE); MÜLLER, Otto, 96145 Sesslach (DE); HÄBLER, Peter, 98704 Langewiesen (DE)
(86) Internationale Anmeldenummer: PCT/EP2011/058445
(87) Internationale Veröffentlichungsnummer: WO 2011/147817

(56) Entgegenhaltungen:
- EP-A1- 2 020 666
- EP-A2- 1 496 184
- US-A- 4 300 029
- US-A- 4 679 030
- US-A1- 2006 139 185

## Beschreibung

Die Erfindung betrifft eine Bedienvorrichtung für ein Fahrzeug. Die Bedienvorrichtung umfasst ein durch eine Bedienperson betätigbares Bedienelement, wie auch einen elektrischen Schalter, welcher abhängig von einer Betätigung des Bedienelements betätigbar ist. Die Bedienvorrichtung umfasst außerdem Übertragungsmittel, welche zum Übertragen eines Betätigungsdrucks von dem Bedienelement auf den Schalter dienen.

Solche Bedienvorrichtungen sind Stand der Technik und somit bekannt, nämlich beispielsweise aus der Druckschrift CN 201134365 Y und der Druckschrift JP 1258325 A. Bei diesen bekannten Bedienvorrichtungen erfolgt die Übertragung des Betätigungsdrucks mithilfe eines beweglichen mechanischen Elements - beispielsweise eines Stößels. Bei solchen Bedienvorrichtungen ist als nachteilig der Umstand anzusehen, dass sie eine Vielzahl von Bauteilen aufweisen, die aufeinander abgestimmt werden müssen. Insbesondere können dabei nur ganz geringe Abweichungen der Abmessungen der Bauteile von einem Sollmaß zugelassen werden, was in der Produktion manchmal schwierig zu realisieren ist. Es ist außerdem nachteilig, dass für solche mechanische Bedienvorrichtungen eine entsprechend große Bautiefe erforderlich ist - dies aufgrund der Vielzahl von Bauelementen.

Es sind außerdem kapazitive Bedienvorrichtungen bekannt: Die Druckschrift WO 2007/014780 A1 beschreibt ein Bedienelement für Kraftfahrzeuge. Ein Druckknopf ist in einem Gehäuse verschiebbar gelagert. Es sind sowohl an dem Druckknopf als auch an dem Gehäuse aus Metall ausgebildete Elektroden angebracht, die miteinander kapazitiv zusammenwirken. Eine Veränderung der Kapazität zwischen den Elektroden kann durch ein Elektronikmodul erfasst und ausgewertet werden.

Es sind außerdem berührungsempfindliche Bedienvorrichtungen bekannt, bei denen ebenfalls das Prinzip der Auswertung einer Kapazitätsänderung genutzt wird. Die kapazitiven Bedienvorrichtungen haben im Allgemeinen den Nachteil, dass die Bedienperson keine haptische Rückmeldung erhält, wenn sie die Bedienvorrichtung betätigt. Je nach Geschwindigkeit der Kapazitätsänderung ist außerdem ein rasches Auswerten dieser Änderung unter Umständen nicht möglich.

Aus der US 4,679,030 A ist ein Schalter für eine Tastatur bekannt, der ein zwischen Bedienelement und Schalter angeordnete fluidgefülltes Kissen umfasst, um eine gewünschte Haptik zu erzeugen.

Aus der US 4,300,029 ist eine Bedienvorrichtung gemäß dem Oberbegriff des Anspruchs 1 bekannt.

Es ist Aufgabe der Erfindung, eine Bedienvorrichtung der eingangs genannten Gattung bereitzustellen, welche besonders benutzerfreundlich ist.

Diese Aufgabe wird erfindungsgemäß durch eine Bedienvorrichtung mit den Merkmalen gemäß Patentanspruch 1 gelöst. Vorteilhafte Ausführungen der Erfindung sind Gegenstand der abhängigen Patentansprüche und der Beschreibung.

Eine erfindungsgemäße Bedienvorrichtung für ein Fahrzeug umfasst ein Bedienelement, welches durch eine Bedienperson betätigt werden kann. Die Bedienvorrichtung umfasst auch einen elektrischen Schalter, der abhängig von einer Betätigung des Bedienelements betätigbar ist. Es sind Übertragungsmittel bereitgestellt, welche zum Übertragen eines Betätigungsdrucks von dem Bedienelement auf den Schalter dienen. Die Übertragungsmittel umfassen ein Fluid zum Übertragen des Betätigungsdrucks.

Erfindungsgemäß wird also der Betätigungsdruck, welchen eine Bedienperson auf das Bedienelement ausübt, auf den elektrischen Schalter durch ein Fluid übertragen. Die Erfindung hat diverse Vorteile: Zum einen ist eine geringe Bautiefe bei der Bedienvorrichtung möglich - es kann eine dünne Bedienvorrichtung bereitgestellt werden. Zum anderen kann die Kraftübertragung von dem Bedienelement auf den Schalter nahezu reibungsfrei und somit verschleißarm erfolgen. Die Übertragung des Betätigungsdrucks kann darüber hinaus auch über längere Strecken innerhalb der Bedienvorrichtung stattfinden, so dass der Schalter quasi an beliebiger Stelle unabhängig von der Betätigungsstelle angeordnet werden kann. Dies erweist sich insbesondere bei Kraftfahrzeugen als besonders vorteilhaft: Das Bedienelement kann beispielsweise an einer erster Stelle im Fahrzeug - beispielsweise an einer Mittelkonsole - angeordnet sein, während der Schalter mit einem Elektronikmodul an einer entfernten zweiten Stelle liegen kann. Das Fluid sorgt außerdem für eine haptische Rückmeldung an die Bedienperson beim Betätigen des Bedienelements; zum Beispiel kann hier eine haptische Rückmeldung des Schalters über das Fluid auf das Bedienelement zurück übertragen werden. Nicht unerwähnt sollte außerdem ein weiterer Vorteil der erfindungsgemäßen Bedienvorrichtung bleiben, nämlich dass sie aufgrund des Vorhandenseins des Fluids optisch ansprechend gestaltet werden kann. Und zwar kann beispielsweise - wenn das Fluid lichtdurchlässig ist - das Bedienelement beleuchtet werden, nämlich beispielsweise an dem Bedienelement angebrachte Symbole. Ist auch das Bedienelement aus einem lichtdurchlässigen Material bereitgestellt, so ergibt sich für die Bedienperson ein zusätzlicher optischer Effekt.

Also beinhaltet die Bedienvorrichtung ein Fluid, welches zum Übertagen des Betätigungsdrucks dient. Unter einem Fluid wird vorliegend insbesondere ein solches Medium verstanden, bei welchem beim Ausüben eines Drucks von außen ein gleicher Druck an jedem Punkt dieses Fluids herrscht. Das Fluid umfasst bevorzugt ein dauerelastisches und/oder hydraulisches und/oder pneumatisches Medium. Das Fluid kann beispielsweise eine Flüssigkeit, ein Gas, ein Gel oder eine beliebige Kombination aus diesen Medien sein. Vorzugsweise wird jedoch ein derartiges Fluid eingesetzt, welches inkompressibel beziehungsweise unkomprimierbar ist und somit im Wesentlichen keine Änderung des Volumens unter Druckeinwirkung aufzeigt. Bei einem solchen Fluid ist nämlich die Übertragung des Betätigungsdrucks ohne Druckverluste möglich.

Es erweist sich als besonders vorteilhaft, wenn das Bedienelement zumindest bereichsweise aus einem elastischen und/oder biegbaren Material ausgebildet ist. Dann ist das Bedienelement zumindest bereichsweise flexibel und kann durch eine Bedienperson besonders leicht betätigt werden. Der flexible Bereich des Bedienelements bildet vorzugsweise eine Betätigungsfläche, die durch die Bedienperson gedrückt werden kann. Das Bedienelement ist bevorzugt - zumindest bereichsweise - ein dünnes beziehungsweise flaches Element. Es kann beispielsweise aus einer Folie und/oder einem dünnwandigen Kunststoff und/oder aus einem Elastomer gebildet sein. Ein dünnwandiger Kunststoff kann dabei durch ein Spritzgießverfahren bereitgestellt sein. Bei einer entsprechend hohen Viskosität des Fluids kann auch ein Kunststoffteil für das Bedienelement eingesetzt werden, welches aus zwei verschiedenen Kunststoffen aufgebaut wird, die sich während des Spritzprozesses miteinander nicht verbinden.

Ein zumindest bereichsweise flexibles Bedienelement hat den Vorteil, dass für die Betätigung des Bedienelements keine zusätzlichen Lager oder Führungen bereitgestellt werden müssen; das Bedienelement wird bei einer Betätigung verformt, und der beim Verformen wirkende Betätigungsdruck wird über das Fluid auf den Schalter übertragen. Die Bedienvorrichtung ist somit besonders verschleißarm.

Das Bedienelement kann beispielsweise die Form einer Haube bzw. einer Kappe bzw. einer Bedeckung aufweisen. Es kann eine Betätigungswand - an diese grenzt das Fluid bevorzugt unmittelbar an - aufweisen, an welche sich an jeder Seite jeweils eine Seitenwand im rechten Winkel anschließt. Dann ist das Bedienelement im Wesentlichen quaderförmig.

Also kann das Bedienelement zumindest bereichsweise ein flaches beziehungsweise dünnes Element sein. Es ist vorzugsweise eine flache Blende. Es kann beispielsweise eine Dicke aus einem Wertebereich von 0,1 mm bis 3 mm aufweisen, insbesondere aus einem Wertebereich von 0,1 mm bis 1 mm. Das Bedienelement - insbesondere seine Betätigungswand - kann außerdem eine Breite aus einem Wertebereich von 1 cm bis 30 cm aufweisen, insbesondere aus einem Wertebereich von 5 cm bis 15 cm. Auch eine Länge des Bedienelements - insbesondere der Betätigungswand - kann in einem Wertebereich von 1 cm bis 30 cm liegen, insbesondere in einem Wertebereich von 5 cm bis 15 cm.

Das Fluid grenzt bevorzugt unmittelbar an das Bedienelement an, nämlich insbesondere an den flexiblen Bereich des Bedienelements bzw. an die Betätigungsfläche. Dann befindet sich das Fluid unmittelbar unter dem Bedienelement, und die Bedienperson kann das Fluid beim Betätigen des Bedienelements fühlen. Der Fahrer kann das Fluid auch leicht ertasten, ohne seinen Blick auf das Bedienelement richten zu müssen. Insbesondere muss der Fahrer den Blick von der Straße nicht abwenden und kann sich somit auf die Straßensituation besser konzentrieren.

Das Bedienelement kann zumindest zwei flexible Betätigungsflächen aufweisen, die jeweils einem elektrischen Schalter zugeordnet sind. Es kann also ein gemeinsames Bedienelement - insbesondere in Form einer flachen Blende - für zumindest zwei Schalter bereitgestellt sein. Bei dieser Ausführungsform wird der Betätigungsdruck von der ersten Betätigungsfläche über ein erstes Fluid auf einen ersten Schalter übertragen; entsprechend wird der Betätigungsdruck von einer zweiten Betätigungsfläche über ein zweites Fluid auf einen zweiten Schalter übertragen. Auf diese Art und Weise wird quasi ein Bedienmodul bereitgestellt, welches mit zumindest zwei Funktionen in dem Fahrzeug verknüpft ist. Durch Betätigen der ersten Betätigungsfläche kann die erste Funktion aktiviert beziehungsweise deaktiviert werden, während die zweite Betätigungsfläche einer anderen Funktion zugeordnet werden kann. Es können somit eine Vielzahl von Funktionen mit einem einzigen Bedienelement, insbesondere einer einzigen flachen Blende, verwirklicht werden, und es kann somit eine besonders benutzerfreundliche Bedienvorrichtung geschaffen werden.

Die Übertragungsmittel umfassen zusätzlich ein eigensteifes Stößelelement - beispielsweise aus Kunststoff, mittels welchem der Betätigungsdruck streckenweise von dem Bedienelement auf den Schalter übertragbar ist. Ein solches Stößelelement wirdsomit zusätzlich zu dem Fluid eingesetzt werden, nämlich insbesondere zwischen dem Fluid und dem Schalter. Das Stößelelement ist direkt neben dem Schalter angeordnet beziehungsweise grenzt unmittelbar an den Schalter an.Dabei wird der Übertragungsdruck von dem Bedienelement zunächst über das Fluid auf das Stößelelement und dann von dem Stößelelement auf den Schalter übertragen. Auf diesem Wege wird der elektrische Schalter zuverlässig betätigt, nämlich mithilfe des Stößelelements.

Hinsichtlich der Ausgestaltung des elektrischen Schalters sind verschiedenste Ausführungsformen sinnvoll möglich. Der Schalter ist vorzugsweise an einer Leiterplatte (PCB) angeordnet. Er kann eine Schaltmatte, ein Taster oder dergleichen sein.

Um eine besonders robuste und betriebssichere Bedienvorrichtung zu schaffen, ist erfindungsgemäß vorgesehen, dass sie einen Grundträger aufweist und das Fluid in einem zwischen dem Bedienelement und dem Grundträger ausgebildeten Raum angeordnet ist. Dann ist das Fluid einerseits durch das Bedienelement und andererseits durch den Grundträger geschützt. In dem Grundträger kann eine Durchgangsöffnung ausgebildet sein, nämlich für das genannte Stößelelement. Das Stößelelement kann sich über die Durchgangsöffnung hindurch erstrecken, so dass es in der Durchgangsöffnung senkrecht zum Bedienelement verschiebbar gelagert ist. Durch eine solche Anordnung des Stößelelements kann der elektrische Schalter betätigt werden, wenn das Fluid Druck auf das Stößelelement ausübt.

Die Bedienvorrichtung weist eine Dichtung auf, welche zum Abdichten des zwischen dem Bedienelement und dem Grundträger ausgebildeten Raums dient. Auf diesem Wege gelingt es, eine dichte und somit besonders betriebssichere Bedienvorrichtung bereitzustellen, nämlich insbesondere bei einer relativ geringen Viskosität des Fluids. Die Dichtung grenzt dabei erfindungsgemäß unmittelbar an den Grundträger an, so dass der genannte Raum unmittelbar durch die Dichtung einerseits und durch das Bedienelement anderseits begrenzt ist. Unmittelbar an die Dichtung kann sich auch das Stößelelement anschließen, nämlich an diejenige Seite der Dichtung, die von dem Fluid abgewandt und dem Grundträger zugewandt ist. Hierdurch kann der Betätigungsdruck besonders leicht von dem Fluid auf das Stößelelement übertragen werden; das Stößelelement ist quasi an dem Fluid abgestützt, nämlich unter Vermittlung der Dichtung. Also kann das Stößelelement einerseits an die Dichtung und andererseits an den elektrischen Schalter angrenzen.

Es erweist sich als besonders vorteilhaft, wenn das Fluid derart bezüglich des Schalters angeordnet ist, dass beim Betätigen des Bedienelements der Druck durch das Fluid hin zum Schalter zumindest streckenweise in einer Richtung übertragen wird, die mit einer Betätigungsrichtung - also quasi mit einer Richtung senkrecht zum Bedienelement - einen Winkel größer als 0°, insbesondere größer als 10°, noch bevorzugter größer als 20°, noch bevorzugter größer als 30°, noch bevorzugter größer als 40°, noch bevorzugter größer als 50°, noch bevorzugter größer als 60°, noch bevorzugter größer als 70°, noch bevorzugter größer als 80°, insbesondere einen Winkel von 90°, einschließt. Also kann der Betätigungsdruck parallel zum Bedienelement übertragen werden, nämlich dann, wenn sich das Fluid entlang des Bedienelements und parallel dazu erstreckt. Auf diesem Wege gelingt es, den Betätigungsdruck auch dann auf den Schalter zu übertragen, wenn der Schalter an einer von dem Bedienelement beziehungsweise einer Betätigungsfläche des Bedienelements entfernten Stelle angeordnet ist. Für das Fluid können beispielsweise Kanäle bereitgestellt sein - zum Beispiel zwischen dem Bedienelement und dem Grundträger -, so dass eine Betätigungsfläche des Bedienelements über einen solchen Kanal mit einem Stößelelement oder direkt mit dem Schalter gekoppelt ist. Ein solcher Kanal kann sich beispielsweise unmittelbar unterhalb des Bedienelements und parallel dazu erstrecken; er kann sich auch in einem beliebigen Winkel zum Bedienelement erstrecken. Der Kanal kann zum Beispiel durch Aussparungen beziehungsweise Vertiefungen in dem Bedienelement - nämlich an seiner Rückseite - gebildet sein.

In einer Ausführungsform ist das Bedienelement mit einem Kennzeichen beziehungsweise einem Symbol versehen, welches bezüglich des Schalters in einer Haupterstreckungsrichtung des Bedienelements versetzt angeordnet ist. Mit anderen Worten sind der Schalter und das Kennzeichen des Bedienelements nicht in Überdeckung zueinander angeordnet und überlappen sich nicht. Bei dieser Ausführungsform kann also der Schalter an einer von dem Kennzeichen entfernten Stelle liegen.

Erfindungsgemäß wird darüber hinaus ein Fahrzeug bereitgestellt, welches eine erfindungsgemäße Bedienvorrichtung oder eine bevorzugte Ausgestaltung der Bedienvorrichtung aufweist. Die mit Bezug auf die erfindungsgemäße Bedienvorrichtung vorgestellten bevorzugten Ausführungsformen und deren Vorteile gelten entsprechend für das erfindungsgemäße Fahrzeug. Das Fahrzeug ist bevorzugt ein Kraftfahrzeug, insbesondere ein Personenkraftwagen.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder auch in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1A: in schematischer und leicht perspektivischer Schnittdarstellung eine Bedienvorrichtung gemäß einer Ausführungsform der Erfindung;
- Fig. 1B: in schematischer Darstellung eine Schnittansicht durch die Bedienvorrichtung gemäß Fig. 1 A;
- Fig. 2: in schematischer und perspektivischer Darstellung die Bedienvorrichtung, wobei ein Bedienelement insgesamt drei Betätigungsflächen aufweist;
- Fig. 3: in schematischer und leicht perspektivischer Darstellung die Bedienvorrichtung, wobei das Bedienelement transparent dargestellt ist;
- Fig. 4: in schematischer Darstellung eine Seitenansicht der Bedienvorrichtung;
- Fig. 5: in schematischer Darstellung eine Rückseite des Bedienelements, wobei ein Grundträger der Bedienvorrichtung transparent dargestellt ist;
- Fig. 6: in schematischer Darstellung eine elastische Dichtung für die Bedienvorrichtung;
- Fig. 7: in schematischer Darstellung die Bedienvorrichtung, wobei eine Betätigungsfläche des Bedienelements beziehungsweise ein daran angebrachtes Symbol in Überdeckung mit einem Schalter und einem Stößelelement angeordnet ist;
- Fig. 8: in schematischer Darstellung die Bedienvorrichtung, wobei eine Betätigungsfläche beziehungsweise ein Symbol bezüglich eines Stößelelements und eines Schalters versetzt angeordnet ist; und
- Fig. 9: in schematischer und leicht perspektivischer Darstellung die Rückseite des Bedienelements.

In den Figuren werden gleiche und funktionsgleiche Elemente mit den gleichen Bezugszeichen versehen.

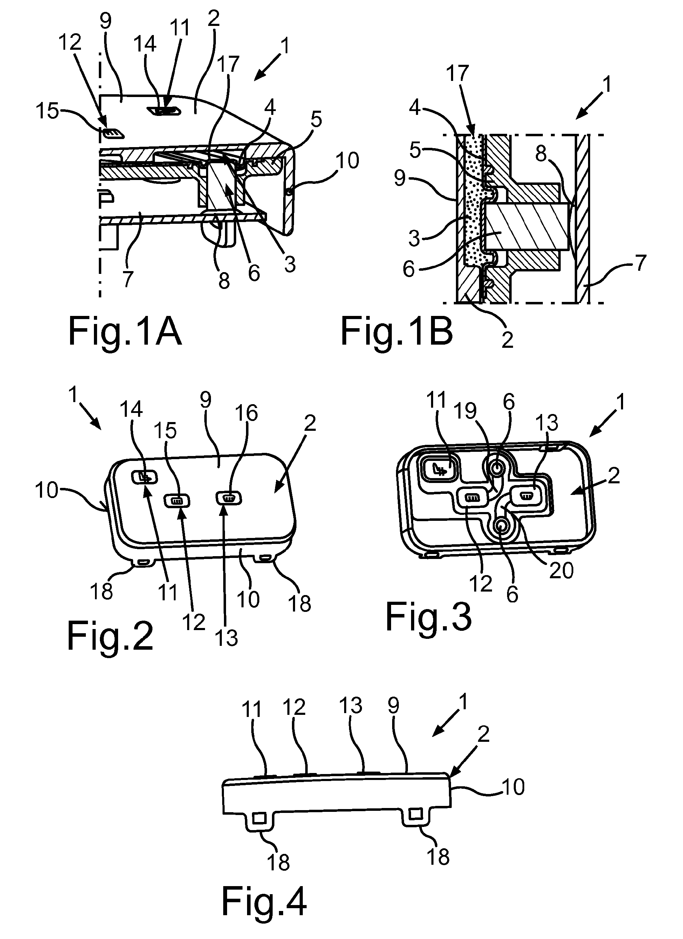

Eine in den Figuren 1A und 1B gezeigte Bedienvorrichtung 1 umfasst ein Bedienelement 2, ein Fluid 3, eine Dichtung 4, einen Grundträger 5, ein Stößelelement 6, wie auch eine Leiterplatte 7 (PCB) mit einem daran angebrachten elektrischen Schalter 8.

Der Schalter 8 kann beispielsweise ein Taster, eine Schaltmatte oder dergleichen sein. Der Schalter 8 ist ein haptisches Element; dies bedeutet, dass der Schalter 8 eine haptische Rückmeldung bei dessen Betätigung erzeugt. Der Schalter 8 kann beispielsweise mit einer Funktion in einem Fahrzeug verknüpft sein, so dass durch Betätigen des Schalters 8 die Funktion aktiviert beziehungsweise deaktiviert wird.

Das Bedienelement 2 ist eine flache beziehungsweise dünne Blende und weist die Haubenform auf. Es weist eine flache Betätigungswand 9 auf, wie auch sich an die Betätigungswand 9 anschließende und mit der Betätigungswand 9 einen Winkel von 90° einschließende Seitenwände 10. Das Bedienelement 2 ist im Wesentlichen eigensteif. Es kann beispielsweise aus Kunststoff ausgebildet sein. Das Bedienelement 9 weist ferner im Ausführungsbeispiel drei flexible Betätigungsflächen auf, nämlich eine erste Betätigungsfläche 11, eine zweite Betätigungsfläche 12 und eine dritte Betätigungsfläche 13 (siehe beispielsweise Fig. 2). Die Betätigungsflächen 11, 12, 13 können beispielsweise aus einem elastischen Material ausgebildet sein. Sie können aber auch ebenfalls wie das gesamte Bedienelement 2 aus einem dünnwandigen Kunststoff bereitgestellt und somit biegbar sein. Es erweist sich jedoch als besonders vorteilhaft, wenn die Betätigungsflächen 11, 12, 13 aus einem elastischen Material ausgebildet sind, während der restliche Teil des Bedienelements 2 aus eigensteifen Kunststoff bereitgestellt ist.

An den Betätigungsflächen 11, 12, 13 ist jeweils ein Symbol beziehungsweise ein Kennzeichen 14, 15, 16 angebracht, welches die jeweilige Funktion symbolisiert.

Das Fluid 3, welches im Ausführungsbeispiel eine flüssiges Medium ist, befindet sich in einem Raum 17 zwischen der Betätigungswand 9 des Bedienelements 2 und der Dichtung 4. Wie in Fig. 1B dargestellt ist, kann der Raum 17 zumindest teilweise durch eine an der Rückwand der Betätigungswand 9 ausgebildete Aussparung bzw. Vertiefung gebildet sein. Die Dichtung liegt bereichsweise an dem Grundträger 5 an. In dem Grundträger 5 ist eine Durchgangsöffnung ausgebildet, durch welche sich das Stößelelement 6 hindurch erstreckt. Das Stößelelement 6 liegt einerseits an der Dichtung 4, nämlich an einer vom Fluid 3 abgewandten Seite der Dichtung 4, und andererseits an dem elektrischen Schalter 8 an. Das Stößelelement 6 ist also in der Durchgangsöffnung verschiebbar gelagert.

Wird nun auf die Betätigungswand 9 - nämlich auf eine der Betätigungsflächen 11, 12, 13 - ein Betätigungsdruck durch eine Bedienperson ausgeübt, so wird dieser über das Fluid 3 auf das Stößelelement 6 übertragen, so dass selbiges den Schalter 8 betätigt. Der Betätigungsdruck wird also über das Fluid 3 und das Stößelelement 6 auf den Schalter 8 übertragen.

In Fig. 2 ist eine perspektivische Draufsicht auf die Bedienvorrichtung 1 dargestellt. Wie aus Fig. 2 hervorgeht, weist das Bedienelement 2 im Ausführungsbeispiel insgesamt vier Befestigungselemente 18 auf (in Fig. 2 sind lediglich zwei Befestigungselemente 18 dargestellt). Die Befestigungselemente 18 sind in Form von Ösen ausgebildet. In Fig. 2 sind außerdem die Betätigungsflächen 11, 12, 13, wie auch die zugehörigen Symbole 14, 15, 16 dargestellt.

In Fig. 3 ist das Bedienelement 2 transparent dargestellt. Zu jeder Betätigungsfläche 11, 12, 13 weist die Bedienvorrichtung 1 jeweils ein genanntes Fluid 3 auf, wie auch jeweils ein genanntes Stößelelement 6 und jeweils einen genannten elektrischen Schalter 8. Das Stößelelement 6 und der Schalter 8, welche der ersten Betätigungsfläche 11 zugeordnet sind, befinden sich unmittelbar unterhalb der Betätigungsfläche 11. Mit anderen Worten ist die Betätigungsfläche 11 in Überlappung mit dem zugehörigen Stößelelement 6 und dem zugehörigen Schalter 8 angeordnet. Hingegen sind die weiteren zwei Betätigungsflächen 12, 13 bezüglich der jeweiligen Stößelelemente 6 und der Schalter 8 versetzt angeordnet. Dabei ist das der Betätigungsfläche 12 zugeordnete Fluid 3 in einem Kanal 19 angeordnet, welcher die Betätigungsfläche 12 mit dem zugehörigen Stößelelement 6 verbindet. Entsprechend ist die Betätigungsfläche 13 über einen Kanal 20 mit dem zugehörigen Stößelelement 6 gekoppelt. In dem Kanal 20 befindet sich das der Betätigungsfläche 13 zugeordnete Fluid 3.

Die Kanäle 19, 20 - diese sind durch jeweils einen genannten Raum 17 zwischen der Betätigungswand 9 und der Dichtung 4 gebildet - erstrecken sich parallel zur Betätigungswand 9. Die Kanäle 19, 20 sind auch durch die Betätigungswand 9 unmittelbar begrenzt, wie auch durch die gemeinsame Dichtung 4. Die Kanäle 19, 20 können beispielsweise durch Aussparungen bzw. Vertiefungen gebildet sein, welche in der Betätigungswand 9 - nämlich an der Innenseite - ausgebildet sind.

In Fig. 4 ist eine Seitenansicht der Bedienvorrichtung 1 gezeigt. Wie aus Fig. 4 hervorgeht, können die Betätigungsflächen 11, 12, 13 eine leicht gewölbte beziehungsweise ausgeprägte Form aufweisen. Alternativ können die Betätigungsflächen 11, 12, 13 auch gerade beziehungsweise flach sein, so dass die gesamte Betätigungswand 9 eine gerade und flache Wand ist.

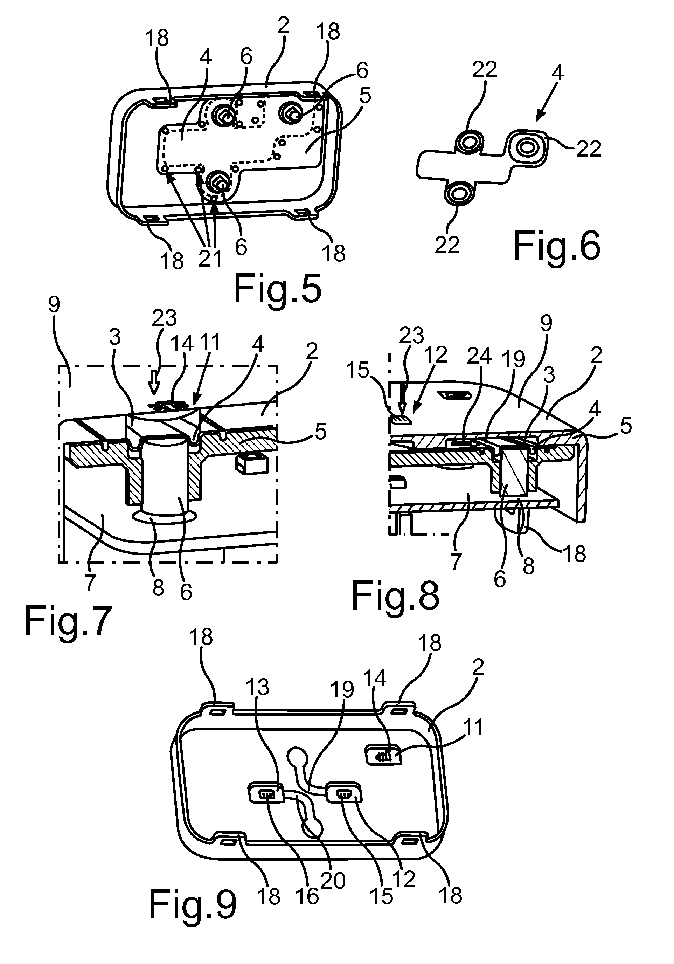

Fig. 5 zeigt eine Rückseite des Bedienelements 2. In Fig. 5 ist der eigensteife und aus Kunststoff bereitgestellte Grundträger 5 transparent dargestellt, so dass die zwischen der Betätigungswand 9 und dem Grundträger 5 liegende Dichtung 4 sichtbar dargestellt ist. In Fig. 5 sind außerdem die Stößelelemente 6 gezeigt. Der Grundträger 5 ist an der Rückseite der Betätigungswand 9 befestigt, nämlich an einer Vielzahl von Befestigungsstellen 21. Die Anbringung des Grundträgers 5 an der Rückseite kann beispielsweise durch Kaltverstemmen und/oder durch Heißverstemmen und/oder durch Verschrauben und/oder durch Verkleben und/oder durch Verschweißen mithilfe des Ultraschalls erfolgen.

In Fig. 6 ist die für alle Betätigungsflächen 11, 12, 13, wie auch für alle Fluide 3 gemeinsame Dichtung 4 dargestellt. Die Dichtung 4 ist beispielsweise aus Gummi ausgebildet. Sie weist insgesamt drei Bereiche 22 auf, an welche die jeweiligen Stößelelemente 6 angrenzen.

Bezug nehmend auf Fig. 7 wird nun die Betätigung der Betätigungsfläche 11 näher erläutert. Auf die Betätigungsfläche 11 wirkt eine Betätigungskraft, nämlich in Betätigungsrichtung 23. Die Betätigungsfläche 11 wird verformt und übt auf das Fluid 3 einen Betätigungsdruck aus. Dieser Betätigungsdruck wird über das Fluid 3 und über die Dichtung 4 auf das unterhalb der Betätigungsfläche 11 befindliche Stößelelement 6 übertragen. Auf diese Art und Weise wird das Stößelelement 6 bewegt und betätigt den Schalter 8.

Bezug nehmend auf Fig. 8 wird die Betätigung der Betätigungsfläche 12 näher erläutert. Wie bereits ausgeführt, ist die Betätigungsfläche 12 über den Kanal 19 mit dem Stößelelement 6 gekoppelt. Wirkt nun eine Kraft auf die Betätigungsfläche 12, nämlich in Betätigungsrichtung 23, so wird der Betätigungsdruck über das Fluid 3 parallel zur Betätigungswand 9 - in Pfeilrichtung 24 - übertragen, nämlich hin zum Stößelelement 6. Die Richtung der Übertragung des Betätigungsdrucks ist durch die Form des Kanals 19 vorbestimmt. Wie aus Fig. 8 hervorgeht, kann der Schalter 8, wie auch das Stößelelement 6, prinzipiell an beliebiger Stelle angeordnet sein. Dies ist durch das Fluid 3 ermöglicht, mittels welchem der Betätigungsdruck über quasi beliebige Strecken übertragen werden kann.

Die Rückseite des Bedienelements 2 ohne den Grundträger 5 und ohne die Dichtung 4 ist in Fig. 9 dargestellt. Die Kanäle 19, 20 sind durch entsprechende Vertiefungen in der Rückseite der Betätigungswand 9 gebildet. Die Betätigungsflächen 11, 12, 13 können auch lichtdurchlässig sein, so dass die entsprechenden Symbole 14, 15, 16 von der Rückseite aus beleuchtet werden können. In diesem Falle kann das Fluid 3 ebenfalls lichtdurchlässig sein.

## Patentansprüche

1. Bedienvorrichtung (1) für ein Fahrzeug, mit einem durch eine Bedienperson betätigbaren Bedienelement (2) und einem elektrischen Schalter (8), welcher abhängig von einer Betätigung des Bedienelements (2) betätigbar ist, und mit Übertragungsmitteln (3, 6) zum Übertragen eines Betätigungsdrucks von dem Bedienelement (2) auf den Schalter (8), wobei die Übertragungsmittel (3, 6) ein Fluid (3) zum Übertragen des Betätigungsdrucks umfassen, wobei die Bedienvorrichtung (1) einen Grundträger (5) aufweist und das Fluid (3) in einem zwischen dem Bedienelement (2) und dem Grundträger (5) ausgebildeten Raum (17) angeordnet ist, wobei die Bedienvorrichtung (1) eine Dichtung (4) aufweist, mittels welcher der Raum (17) abgedichtet ist und
sich die Dichtung (4) an den Grundträger (5) unmittelbar anschließt, so dass der Raum (17) unmittelbar durch die Dichtung (4) einerseits und durch das Bedienelement (2) andererseits begrenzt ist,
**dadurch gekennzeichnet, dass**
die Übertragungsmittel (3, 6) zusätzlich ein eigensteifes Stößelelement (6) umfassen, mittels welchem der Betätigungsdruck streckenweise von dem Bedienelement (2) auf den Schalter (8) übertragbar ist, wobei das Stößelelement (6) zwischen dem Fluid (3) und dem Schalter (8) angeordnet ist, einerseits an die Dichtung und andererseits an den elektrischen Schalter angrenzt.und unmittelbar an die an die von dem Fluid abgewandte und dem Grundträger zugewandte Seite der Dichtung anschließt, derart dass Stößelelement unter Vermittlung der Dichtung an dem Fluid abgestützt ist.

2. Bedienvorrichtung (1) nach Anspruch 1,
**dadurch gekennzeichnet, dass**
das Bedienelement (2) zumindest bereichsweise flexibel, insbesondere aus einem elastischen und/oder biegbaren Material, ausgebildet ist.

3. Bedienvorrichtung (1) nach Anspruch 1 oder 2,
**dadurch gekennzeichnet, dass**
das Fluid (3) unmittelbar an das Bedienelement (2) angrenzt.

4. Bedienvorrichtung (1) nach einem der vorhergehenden Ansprüche,
**dadurch gekennzeichnet, dass**
das Bedienelement (2) zumindest zwei flexible Betätigungsflächen (11, 12, 13) aufweist und die Bedienvorrichtung (1) für jede Betätigungsfläche (11, 12, 13) einen elektrischen Schalter (8) aufweist, wobei die Übertragungsmittel (3, 6) für jede Betätigungsfläche (11, 12, 13) jeweils ein Fluid (3) zum Übertragen des Betätigungsdrucks von der jeweiligen Betätigungsfläche (11, 12, 13) auf den zugeordneten Schalter (8) umfassen.

5. Bedienvorrichtung (1) nach einem der vorhergehenden Ansprüche,
**dadurch gekennzeichnet, dass**
das Fluid (3) derart bezüglich des Schalters (8) angeordnet ist, dass beim Betätigen des Bedienelements (2) der Druck durch das Fluid (3) hin zum Schalter (8) zumindest streckenweise in einer Richtung (24) übertragbar ist, die mit einer Betätigungsrichtung (23) einen Winkel größer als 0°, insbesondere einen Winkel von 90°, einschließt.

6. Bedienvorrichtung (1) nach einem der vorhergehenden Ansprüche,
**dadurch gekennzeichnet, dass**
das Bedienelement (2) mit einem Kennzeichen (14, 15, 16) versehen ist, welches bezüglich des Schalters (8) in einer Haupterstreckungsrichtung des Bedienelements (2) versetzt angeordnet ist.

## Claims

1. Operating device (1) for a vehicle, having an operating element (2) which can be activated by an operator and an electric switch (8) which can be activated as a function of an activation of the operating element (2), and having transmitting means (3, 6) for transmitting an activation pressure from the operating element (2) to the switch (8), wherein the transmitting means (3, 6) comprise a fluid (3) for transmitting the activation pressure, wherein the operating device (1) has a base carrier (5), and the fluid (3) is arranged in a space (17) which is formed between the operating element (2) and the base carrier (5), wherein the operating device (1) has a seal (4) by means of which the space (17) is sealed, and
the seal (4) directly adjoins the base carrier (5), with the result that the space (17) is limited directly by the seal (4), on the one hand, and by the operating element (2), on the other,
**characterized in that**
the transmitting means (3, 6) additionally comprise an inherently rigid plunger element (6) by means of which the activation pressure can be transmitted on certain paths from the operating element (2) to the switch (8), wherein the plunger element (6) is arranged between the fluid (3) and the switch (8), adjoins the seal, on the one hand, and the electric switch, on the other, and is connected directly to the side of the seal which faces away from the fluid and faces the base carrier, in such a way that the plunger element is supported on the fluid via the seal.

2. Operating device (1) according to Claim 1,
**characterized in that**
the operating element (2) is embodied so as to be flexible at least in certain areas, in particular from an elastic and/or flexible material.

3. Operating device (1) according to Claim 1 or 2,
**characterized in that**
the fluid (3) adjoins the operating element (2) directly.

4. Operating device (1) according to one of the preceding claims,
**characterized in that**
the operating element (2) has at least two flexible activation surfaces (11, 12, 13) and the operating device (1) has an electric switch (8) for each activation surface (11, 12, 13), wherein the transmitting means (3, 6) comprise in each case a fluid (3) for each activation surface (11, 12, 13), for transmitting the activation pressure from the respective activation surface (11, 12, 13) to the assigned switch (8).

5. Operating device (1) according to one of the preceding claims,
**characterized in that**
the fluid (3) is arranged with respect to the switch (8) in such a way that when the operating element (2) is activated the pressure can be transmitted by the fluid (3) to the switch (8) at least on certain paths in a direction (24) which includes an angle greater than 0°, in particular an angle of 90°, with an activation direction (23).

6. Operating device (1) according to one of the preceding claims,
**characterized in that**
the operating element (2) is provided with a label (14, 15, 16) which is arranged offset with respect to the switch (8) in a direction of the main extent of the operating element (2) .

## Revendications

1. Dispositif de commande (1) pour un véhicule, comprenant un élément de commande (2) pouvant être actionné par un opérateur et un commutateur électrique (8) qui peut être actionné en fonction de l'actionnement de l'élément de commande (2) et comprenant des moyens de transfert (3, 6) pour transférer une pression d'actionnement de l'élément de commande (2) au commutateur (8), les moyens de transfert (3, 6) comprenant un fluide (3) pour transférer la pression d'actionnement, le dispositif de commande (1) présentant un support de base (5) et le fluide (3) étant disposé dans un espace (17) réalisé entre l'élément de commande (2) et le support de base (5), le dispositif de commande (1) présentant un joint d'étanchéité (4) au moyen duquel l'espace (17) est étanchéifié et le joint d'étanchéité (4) se raccordant directement au support de base (5) de sorte que l'espace (17) soit limité directement par le joint d'étanchéité (4) d'une part et par l'élément de commande (2) d'autre part,
**caractérisé en ce que**
les moyens de transfert (3, 6) comprennent en outre un élément de poussoir (6) de rigidité propre au moyen duquel la pression d'actionnement peut être transmise par sections de l'élément de commande (2) au commutateur (8), l'élément de poussoir (6) étant disposé entre le fluide (3) et le commutateur (8), étant adjacent d'une part au joint d'étanchéité et d'autre part au commutateur électrique et se raccordant directement au côté du joint d'étanchéité opposé au fluide et tourné vers le support de base, de telle sorte que l'élément de poussoir soit supporté par l'intermédiaire du joint d'étanchéité contre le fluide.

2. Dispositif de commande (1) selon la revendication 1,
**caractérisé en ce que**
l'élément de commande (2) est réalisé sous forme au moins en partie flexible, en particulier à partir d'un matériau élastique et/ou flexible.

3. Dispositif de commande (1) selon la revendication 1 ou 2,
**caractérisé en ce que**
le fluide (3) est directement adjacent à l'élément de commande (2).

4. Dispositif de commande (1) selon l'une quelconque des revendications précédentes,
**caractérisé en ce que**
l'élément de commande (2) présente au moins deux surfaces d'actionnement flexibles (11, 12, 13) et le dispositif de commande (1) pour chaque surface d'actionnement (11, 12, 13) présente un commutateur électrique (8), les moyens de transfert (3, 6) pour chaque surface d'actionnement (11, 12, 13) comprenant à chaque fois un fluide (3) pour transférer la pression d'actionnement de la surface d'actionnement respective (11, 12, 13) au commutateur associé (8) .

5. Dispositif de commande (1) selon l'une quelconque des revendications précédentes,
**caractérisé en ce que**
le fluide (3) est disposé par rapport au commutateur (8) de telle sorte que lors de l'actionnement de l'élément de commande (2), la pression puisse être transférée par le fluide (3) vers le commutateur (8) au moins par sections dans une direction (24) qui forme avec un dispositif d'actionnement (23) un angle supérieur à 0°, en particulier un angle de 90°.

6. Dispositif de commande (1) selon l'une quelconque des revendications précédentes,
**caractérisé en ce que**
l'élément de commande (2) est pourvu d'un signe (14, 15, 16) qui est disposé de manière décalée par rapport au commutateur (8) dans une direction d'étendue principale de l'élément de commande (2).
